Europäisches Patentamt

(19) European Patent Office

Office européen des brevets

(11) **EP 0 723 494 B1**

(12) **EUROPEAN PATENT SPECIFICATION**

(45) Date of publication and mention
of the grant of the patent:
**28.01.1998 Bulletin 1998/05**

(21) Application number: **94928965.6**

(22) Date of filing: **11.10.1994**

(51) Int. Cl.⁶: **B29C 33/08**, B29C 70/76,
H05B 6/62

(86) International application number:
**PCT/GB94/02215**

(87) International publication number:
**WO 95/10403 (20.04.1995 Gazette 1995/17)**

(54) **APPARATUS FOR AND METHOD OF EDGE ENCAPSULATING A GLAZING PANEL**

VORRICHTUNG UND VERFAHREN ZUM RANDEINFASSEN EINER VERGLASUNGSPLATTE

APPAREIL ET PROCEDE D'ENCAPSULAGE DES BORDS D'UNE VITRE

(84) Designated Contracting States:
**AT BE DE ES FR GB IT LU NL PT SE**

(30) Priority: **12.10.1993 GB 9320985**

(43) Date of publication of application:
**31.07.1996 Bulletin 1996/31**

(73) Proprietor: **PILKINGTON PLC**
**St. Helens, Merseyside WA10 3TT (GB)**

(72) Inventors:
• **GREENHALGH, Geoffrey**
**Lancashire WN5 8SU (GB)**
• **MASON, Malcolm**
**Cheshire WA3 2PE (GB)**
• **PENNINGTON, David**
**Lancashire L40 1SY (GB)**
• **ROWLEY, Andrew, Terence**
**Cheshire CW5 8PU (GB)**

(74) Representative:
**Jenkins, Peter David et al**
**PAGE WHITE & FARRER**
**54 Doughty Street**
**London WC1N 2LS (GB)**

(56) References cited:
**EP-A- 0 159 368**          **EP-A- 0 333 538**
**EP-A- 0 413 975**          **EP-A- 0 436 438**
**EP-A- 0 577 195**          **DE-C-  821 817**
**FR-A- 2 251 421**          **US-A- 2 891 284**

EP 0 723 494 B1

# Description

The present invention relates to an apparatus for and a method of edge encapsulating a glazing panel. The glazing panel may, but need not, be a panel intended to glaze a window opening in a vehicle body, e.g. an automotive glazing panel.

Edge encapsulation of glazing panels is a known technique whereby a plastics encapsulation is moulded in situ around all or part of at least the peripheral margin of a glazing panel. The moulding is carried out by placing the panel in a mould shaped to receive it and defining a cavity for the encapsulating material (the "encapsulant"), introducing a settable encapsulating material as a liquid, and setting the material to form a solid encapsulation. The encapsulation thus produced is bonded to the glazing panel, and is sometimes described as integral with the panel. The panel may be flat or curved, and made of glass and/or plastics material. If made of glass, the panel may be toughened, laminated or annealed. Such edge encapsulation techniques (referred to hereinafter simply as "encapsulation" for brevity) are known from WO 85/01468 and GB 2,147,244 for example.

It is known to encapsulate glazing panels by Reaction Injection Moulding (RIM) techniques in which the material is set by curing to form the solid encapsulation, or by moulding thermoplastic materials such as PVC which set by cooling. For successful operation of these techniques, it is necessary to ensure that the mould is substantially filled with encapsulating material before any significant setting of the material has occurred. Accordingly, these prior techniques require the use of very high pressures to fill the mould in an acceptably short time. Typically, RIM techniques require the encapsulating material to be injected at pressures of several MPa, and PVC moulding requires several tens of MPa. The mould normally comprises two halves which are held shut against each other by a clamping pressure which is required to exceed the injection pressure. As a result, the moulds need to be manufactured from a strong, rigid material such as steel, and machined so that the mating surfaces of the mould halves fit tightly against each other, and seal against the glazing panel to be encapsulated, when subjected to such high pressures. Such moulds are very expensive and require considerable fabrication time. Furthermore, when encapsulating curve panels of glass, any panels which are slightly out of tolerance in size or shape may be broken by the clamping pressure applied to the rigid mould halves.

It has been recognised for some time that the art of edge encapsulation would greatly benefit from a moulding technique which could be carried out at very low pressures, allowing the use of cheap and slightly flexible moulds. It has been suggested in a Japanese specification with publication number JP 1-122722 (in the name of Asahi Glass KK) that a plastisol be used as encapsulating material for a glazing panel, because such a material has a low viscosity and does not begin to cure until heated. A high frequency heating electrode is amongst the heating means suggested, but no further details of this are disclosed.

EP 333 538 (in the names of Automobile Peugeot and Automobiles Citroen) discloses a method of producing a seal on a glazing panel by moulding the seal from PVC plastisol in a silicone rubber mould and heating it by electromagnetic radiation. The mould is positioned between two parallel aluminium plates which are connected to a generator producing electromagnetic waves in the range from 3 to 3000 MHz. Cooling channels are provided within the plates.

However, problems have been experienced with this technique when the seal to be moulded is of non-uniform cross-section, and especially when, as is frequently the case, the seal includes a portion, e.g. a lip, of thin cross-section. With such shapes it has been found that the thin portion may not be fully cured by the electromagnetic radiation, after full curing of thicker portions has been effected.

Attempts have been made to provide uniform heating of workpieces of varying thicknesses in a radio frequency heating field in the shoe industry. In EP 159 368 (Clint, Inc) it is proposed to heat a thermoplastic material by radio frequency heating to cause it to flow so it can be flow moulded into a shoe sole. The capacitance of the moulding equipment may be maintained uniform by varying the dielectric constant of the mould material, or by altering the electrode separation, or by inclusion of an air space between the electrodes but outside the mould in connection with a thicker section of the sole.

However, later documents concerned with encapsulation of glazing panels by materials which are settable by high frequency electric fields do not address the problems of non-curing of thinner sections. For example, EP 425 011 (Lys Fusion S.P.A.) is concerned with providing a mould with an elastomeric sealing arrangement designed to grip the glazing panel. EP 436 438 (Automobiles Peugeot/Automobiles Citroen) is directed to the inclusion of inserts having a decorative or utilitarian function in the encapsulation.

It has now been found that the problems of curing thinner sections may be alleviated by shaping the electric field between the plates (which serve as electrodes). The field-shaping occurs as a result of modifications to the mould.

According to the present invention there is provided a mould for moulding an edge encapsulation on to a glazing panel, comprising a mould body composed of dielectric material shaped to receive the glazing panel, the mould body defining an elongate cavity for receiving a liquid encapsulating material, which, in use, surrounds an edge portion of the glazing panel, characterised in that an electrically polarizable field shaping element is provided within the mould body.

The field shaping element accordingly comprises, at least in use, an electrically polarizable material, that is, a material in which an applied electric field causes a displacement of charge (i.e. a dipole) but which to a first approximation is non-conducting. The skilled person will of course appreciate that many such materials are in fact poorly conducting rather than perfect insulators, but such conductivity is many orders of magnitude lower than the conductivity of materials generally regarded as conductors, such as metals. While it is possible to shape an electric field by placing a conducting body between the plates of an electric field creating apparatus (generally referred to as an "applicator"), because such a body will assume the average potential of the space it occupies and reduce the potential gradient across this space to effectively zero, this technique is not preferred because it does not offer the flexibility and versatility of the present invention, as will be explained hereafter.

Electrically polarizable materials may be either dielectric, in which the polarization is lost when the material is no longer subjected to an electric field, or ferroelectric, in which a degree of polarization is permanent. Ferroelectric materials have higher dielectric constants than dielectric materials; barium and calcium titanates are examples of ferroelectric materials.

The field shaping element may comprise a solid dielectric or ferroelectric body disposed in a cavity defined in the mould body or an enclosure for a dielectric liquid. Use of different polarisable materials with different dielectric properties e.g. dielectric constants, for the element allows the field shaping effect of the field shaping element to be altered. Preferably, the polarizable material comprised by the field shaping element has a dielectric constant in the range from 2 to 1000, more preferably it is a dielectric material having a dielectric constant in the range from 50 to 100. When a dielectric liquid is used, the enclosure is separate and additional to the mould cavity which receives the encapsulating material, and thus the encapsulating material to be heated is located outside the enclosure.

Preferably, the enclosure is a conduit through which the liquid is passed. This permits easy exploitation of the advantages of a dielectric liquid; use of a flowing liquid as a dielectric field shaping body facilitates changing one liquid for another, or altering the dielectric properties of the liquid in use (e.g. by altering its temperature or adding a solute).

The present invention further provides an apparatus for edge encapsulating a glazing panel, comprising a mould in accordance with the present invention in combination with a supply system for supplying liquid encapsulating material to the elongate cavity in the mould, and an electric field generator for subjecting the mould to an alternating electric field.

Preferably, the electric field generator is arranged is arranged to operate at a frequency from 5 to 500 MHz, preferably from 10 to 100 MHz.

The present invention also provides a method of moulding an edge encapsulation on to a glazing panel comprising the steps of:

(a) providing a mould comprising a mould body composed of dielectric material shaped to receive the glazing panel, the mould body defining an elongate cavity for receiving a liquid encapsulating material heatable by dielectric heating,
(b) placing the glazing panel in the mould so that an edge portion of the panel projects into the mould cavity,
(c) introducing the liquid encapsulating material into the cavity so as to surround the edge portion of the panel,
(d) subjecting the mould and the encapsulating material to an alternating electric field to produce a heating effect in the encapsulating material in order to see it, characterised by

providing in the mould body an electrically polarizable field shaping element whereby a substantially uniform heating effect is produced in the encapsulating material thereby concentrating the intensity of the electric field in a desired portion of the encapsulating material.

This method allows the use of polymer materials for encapsulation which it has not been possible to use in the past. Such materials may afford advantageous properties, e.g. durability, stiffness, to an encapsulated glazing panel thus produced.

The present invention employs a method of dielectric heating comprising the steps of providing an electric field space between radio frequency (RF) electrodes, locating the product body in said field space for dielectric heating, said produce body having a shape or a distribution of dielectric constant such that the electric field produced in the body by the radio frequency electrodes has an undesirable intensity distribution in the body, locating also in the field space at least one electric field shaping body, the shape and dielectric constant of the field shaping body and its location in the field space relative to the product body being selected to modify the electric field in the product body to a more desirable intensity distribution, and applying radio frequency energy to the electrodes to heat the product body.

Specific non-limiting embodiments of the invention will now be described with reference to the accompanying drawings in which:

Figures 1a, 1b and 1c illustrate model results for a parallel plate RF applicator containing a rectangular dielectric body to be heated and showing respectively the distribution of electric potential, electric field and power density as calculated by finite element analysis;
Figures 2a, 2b and 2c illustrate model results for the electric potential, the electric field and power density distributions of a wedge shaped curable polymer contained in a mould;

Figures 3a, 3b and 3c correspond to Figures 2a, 2b and 2c, and show the modelled effect of the inclusion of a field shaping element formed by a pipe of cooling liquid extending through the material of the mould;

Figures 4a, 4b and 4c illustrate model results for the electric potential, electric field and power density distributions in liquid encapsulating material in a mould cavity which includes part of a glass pane. Figure 4 again shows the modelled effect of a field shaping element as in Figure 3.

Figure 5 shows a glazing panel having a peripheral encapsulation moulded by the method of the present invention;

Figure 6 is an enlarged cross-section of a part of the peripheral margin of the panel of Fig. 5 including the encapsulation, the cross-section being taken along the lines VI-VI shown in Figure 5. The cross-sectional profile of the encapsulation of the panel of Fig. 5 is the same on the two long sides of the panel, and so the lines VI-VI appear twice.

Figure 7 is a similarly enlarged cross-section of a part of the peripheral margin of the panel of Fig. 5 including the encapsulation, the cross-section being taken along the lines VII-VII shown in Figure 5;

Figure 8 is a schematic general side view of a moulding apparatus including a press containing a mould which may be provided with the field shaping element of the present invention;

Figure 9 is an enlarged side view of the press of Figure 8;

Figure 10 is a further enlarged cross-section of part of a mould in accordance with the invention.

Figure 11 is a similar view to Figure 10, but shows an alternative embodiment of the invention.

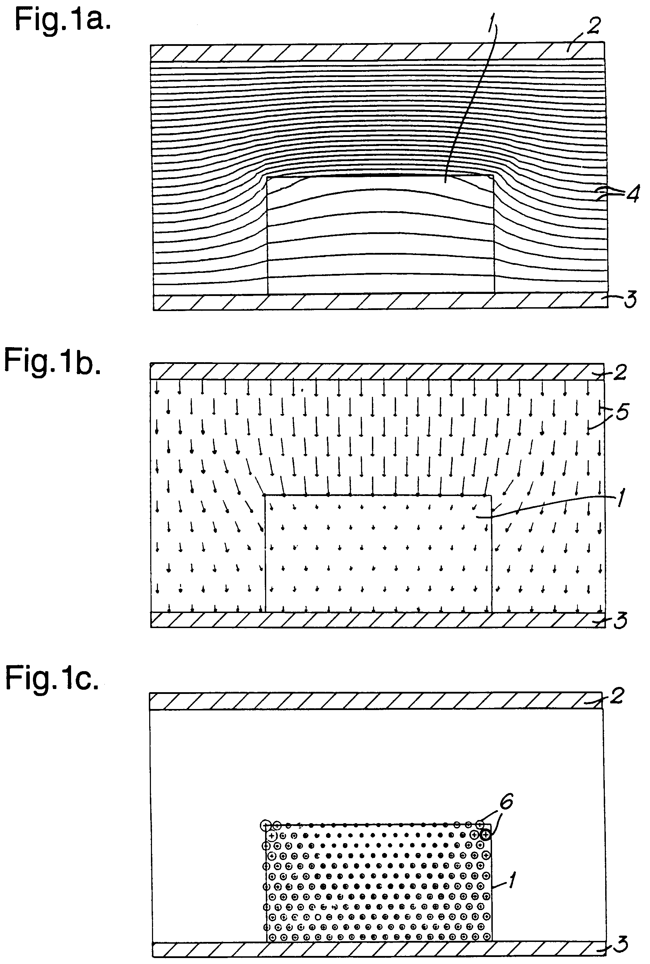

A description of the principle underlying the invention will now be given with reference to Figures 1, 2 and 3. As is well known, a RF applicator for dielectric heating can be considered as a parallel plate capacitor that is filled with layers of different dielectric materials (some of which may be air). When a body of dielectric material is introduced between the plates which are applying an electric field, a so-called depolarising field forms within the dielectric material, produced by the alignment of the electric dipoles formed by the molecules of the dielectric material with the applied field. This depolarising field opposes the applied field so that the net field within the dielectric material has a reduced magnitude. The amount by which the field in the dielectric is reduced depends on the dielectric constant of the dielectric material as well as its relative thickness between the plates.

The dielectric constant is governed by the relative permittivity $\varepsilon_r$ which is given by:

$$\varepsilon_r = \varepsilon_r{}' - \varepsilon_r{}''j$$

where $\varepsilon_r{}'$ denotes the dielectric constant and $\varepsilon_r{}''$ denotes the dielectric loss factor.

Dielectric heating may be defined as the use of an alternating (usually radio frequency) electric field to heat an essentially non conducting body. Although the material of the body may have a very high resistivity, significant power density may nevertheless be developed within the body by means of the radio frequency (RF) field as a result of the dielectric loss factor of the material. Therefore, dielectric heating may be considered applicable to essentially non conducting materials, but may also be used to describe the radio frequency heating of materials which have significant electric conductivity, but not so high that the penetration depth of the electromagnetic alternating field within the body becomes small relative to the thickness of the body to be heated. Dielectric heating can generally be distinguished from microwave heating, in which microwave energy is absorbed within a body by mechanisms involving resonant absorption by molecules of the material of the body, typically water molecules.

In industrial applications of dielectric heating, there are often practical requirements giving rise to complex problems in terms of the configuration of the electric field and the behaviour of dielectric materials. This complicates the design of RF applicators and it is desirable to be able to model the electric field in terms of its potential and distribution, and the distribution of power density produced in dielectric materials in the field. A two dimensional model is normally required, and this requires a solution of a modified two dimensional LaPlace equation for the electric potential, V(x,y), in the presence of dielectric media

$$\text{i.e } \operatorname{div}(\varepsilon_r \operatorname{grad} V(x,y)) = 0 \qquad (a)$$

and then an evaluation of the electric field, E, from

$$\varepsilon = -\operatorname{grad} V(x,y) \qquad (b)$$

Except in the most simple of geometric cases, such as a material with a circular cross section in an otherwise uniform electric field, this calculation cannot be solved analytically, and numerical methods must be employed. The most appropriate numerical method for this type of problem is finite element analysis.

In finite element analysis, the situation geometry is divided up into a number of small elements (usually triangles). Within these elements, the electric potential, V, is assumed to vary linearly with position, and the problem reduces to evaluating the individual voltages at the nodes (points or corners) of the elements. At least one boundary condition, such as the electric potential on the RF electrodes, is also required. An approximation to the LaPlace equation is selected (which is solvable analytically) and the nodal values of the electric potential are calculated. The approximation equation is modified until the optimum results are obtained. Electric potentials at points within the individual elements are then evaluated by linear interpolation.

Once the variation of electric potential over the system geometry is known, the electric field can be calculated from equation (b) above and the power density variation can then be calculated.

Fortunately, this method has become an accepted and standard technique for solving problems of this type, and many computer software packages are available which perform these calculations. In order to use such software effectively, an approximation to the system of interest has to be decided upon and the coordinates of its constituents entered into the model. An appropriate size for the finite elements (triangles) is chosen, and the system is "meshed" to form a grid. The analysis then requires the relative permittivity of any materials in the system; the complex voltage on the RF electrodes, and the frequency of the RF voltage. With this information, the electric potential, V, the electric field, E, and the power density, $P_v$, can be plotted as a function of position.

An example of such modelling is shown in Figures 1a, 1b and 1c. A rectangular block 1 of dielectric material ($\varepsilon_r$ = 5.0 - 0.5**j**) is placed between parallel plate RF electrodes 2 and 3. The rest of the space between the electrodes is air ($\varepsilon_r$ = 1.0 - 0.0**j**). A RF voltage of magnitude 5000V and frequency 27.12MHz is applied to the upper electrode 2, and the lower electrode 3 is held at earth potential. Figure 1a shows the contours 4 of constant voltage calculated by the finite element method. Thirty contours are plotted at 167V intervals. The presence of the dielectric clearly distorts the voltage distribution from that expected between two plates with only air between them (parallel, equally spaced contours). Since the dielectric constant of the block 1 of dielectric material is greater than that of air, it tends to "push out" the voltage contours into the air around it. Consequently, the electric field is reduced within the block 1, and increased in the surrounding air. A similar effect would occur if the air were replaced by a different material e.g. a mould material provided that the dielectric constant of that material were similar to that of air, or at least substantially less than that of the block 1.

Figure 1b shows the electric field distribution. The electric field at a selected point is represented by an arrow 5 whose length indicates the relative magnitude of the field. The direction of the arrow corresponds to the direction of the electric field. It can be seen that the electric field within the dielectric is considerably smaller than the electric field in the air above it. The electric field is largest at the top corners of the sample block 1.

Figure 1c is a plot of the power density distribution represented as circles 6. Here, the power density is proportional to the diameter of the circles 6. Only materials with a non-zero $\varepsilon_r$" will have a non-zero power density - in this case the dielectric block 1.

This modelling technique may be applied to the curing of liquid polymers which can be solidified by raising their temperature above a certain curing point. Such polymers are very convenient to use as they can be poured into moulds to produce complicated shapes. Silicone rubber, which is relatively easy to handle and cheap to use, is often used for these moulds. Unfortunately, silicone rubber is also a good heat insulator which makes it difficult to transfer externally applied heat through the mould to the product.

RF dielectric heating is ideally suited to this application as a significant RF electric field can be generated easily throughout the whole of the mould and liquid polymer sample.

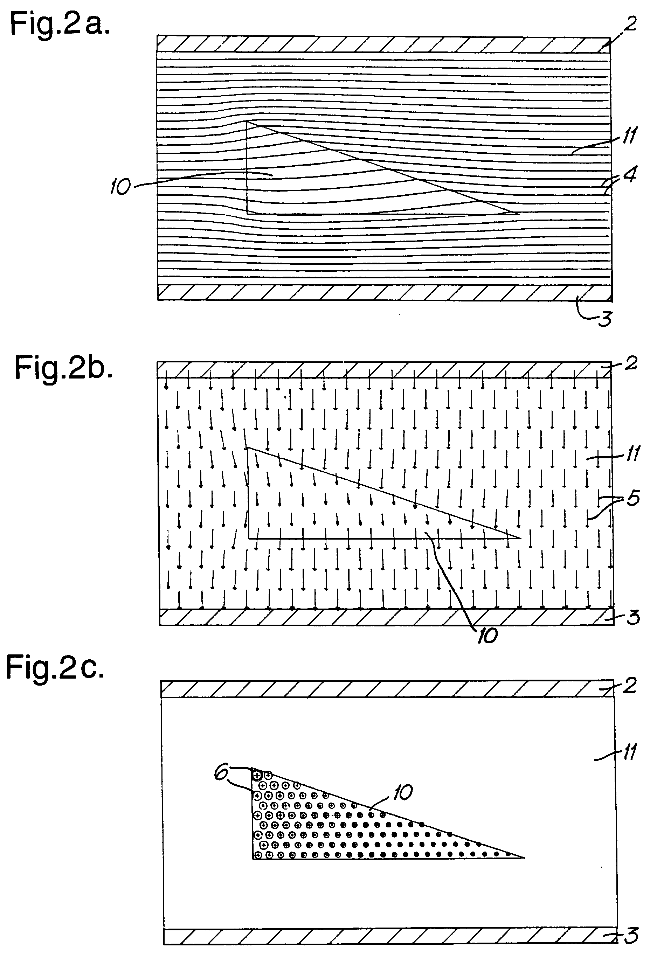

Figures 2a, 2b and 2c show the modelled situation for a wedge shaped polymer 10 in a silicone rubber mould 11 occupying the remaining space between the electrodes. The relative permittivity $\varepsilon_r$ of the silicone rubber is typically 3.0 - 0.0**j**, and the measured value of $\varepsilon_r$ for the liquid polymer is about 5.0 - 0.5**j**. Again, this system can be easily modelled using two dimensional finite element analysis giving the results shown in Figures 2a, 2b and 2c. Since the dielectric constant of the polymer 10 is not very different to that of the mould 11, there is no extreme distortion of the electric field. However, as the power density is proportional to the square of the electric field, even a relatively small variation in field throughout the cross section of the polymer can lead to a significant variation in power density. In this case the thick part of the wedge will be heated appreciably more than the thin part.

In addition to this non-uniform power density, the thin end of the wedge will lose proportionately more of its heat to the surrounding mould (due to the larger surface area to volume ratio) and so any temperature variation across the wedge will be exaggerated This non-uniform heating leads to the thin end not being cured (i.e. still liquid) when the sample is removed from the mould.

A desirable feature of this type of process is a mechanism for cooling the product, after curing and before it is removed from the mould. In the same way that the silicone rubber prevents the product from being heated externally, it also reduces the efficiency of any external cooling process. One solution is to provide cooling channels within the mould itself through which a liquid, e.g. cold water, can flow after the sample has been cured. This cooling liquid can be used as an additional field shaping dielectric to increase the power density at the thin end of the polymer wedge. Again, using finite element analysis this system can be easily modelled.

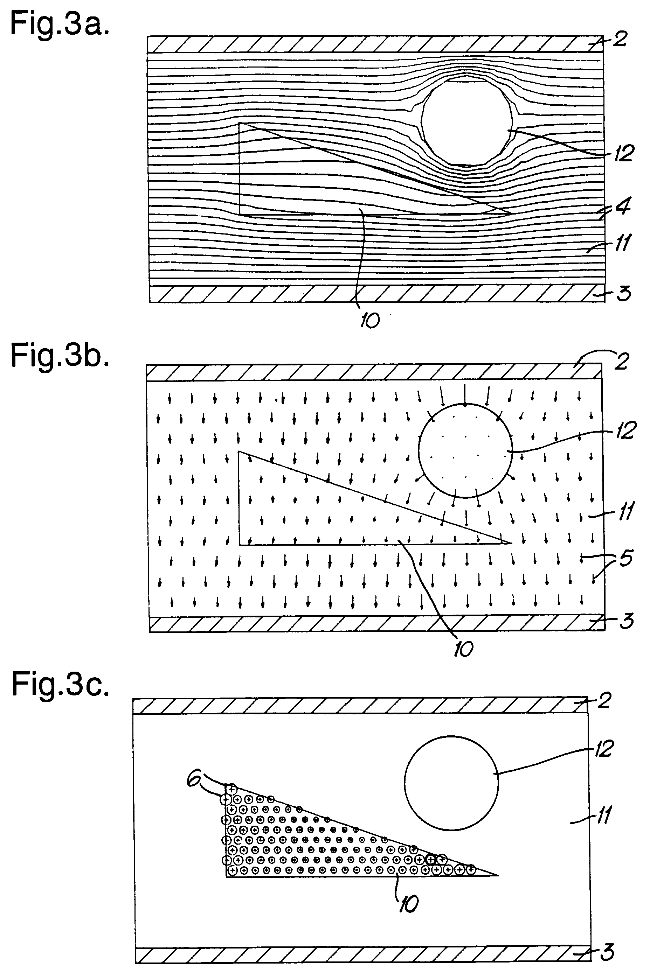

Figures 3a, 3b and 3c show the results of modelling the distribution of electric potential, electric field and power density for the wedge shaped polymer 10 and mould 11 when a dielectric field shaping body 12 is added. The body 12 comprises a cooling water pipe, shown in cross section, positioned above the thin end of the wedge. By repeating the model with small variations in the cross-sectional shape, size or position of the water pipe, these parameters may be optimized, so as to concentrate the electric field to the extent required to give the increased power density desired.

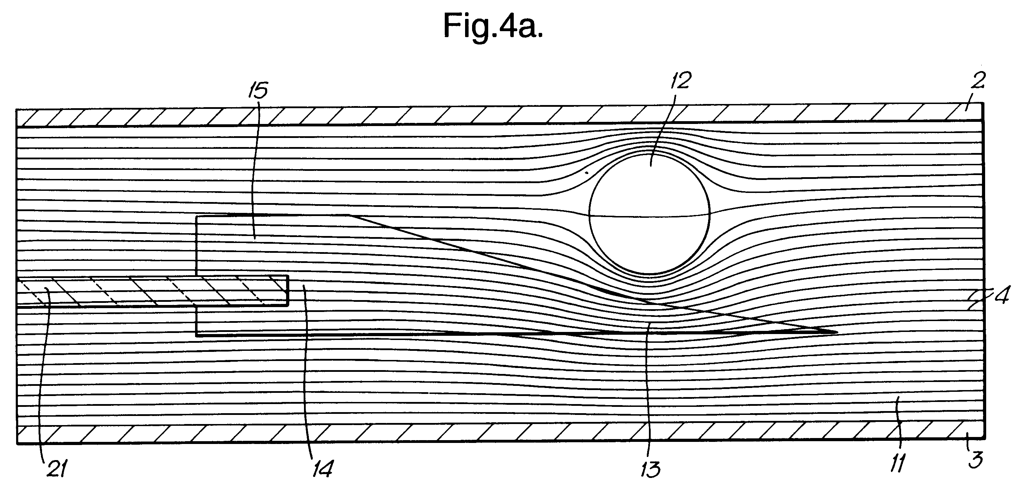

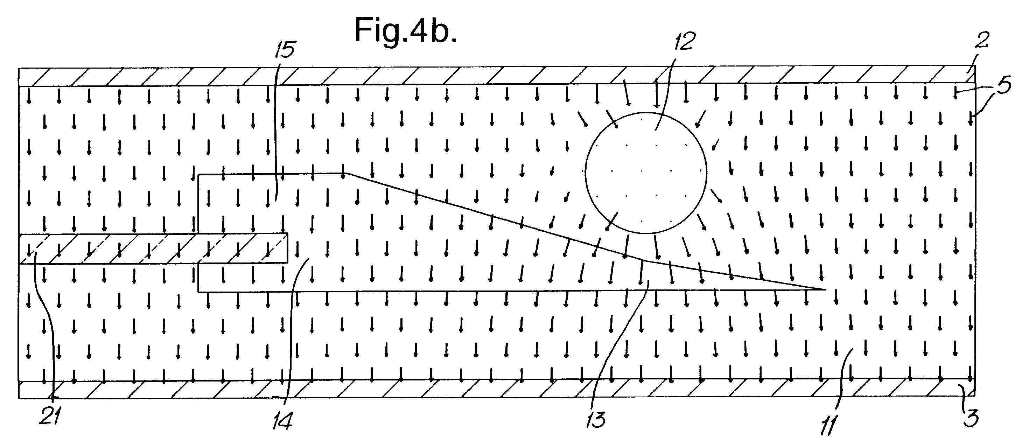

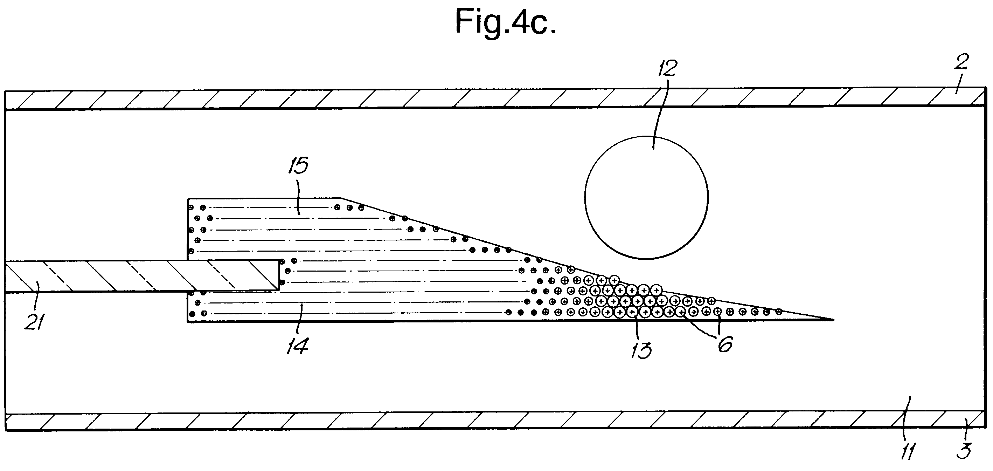

Figures 4a, 4b and 4c show corresponding model results for a polymer 15 comprising encapsulating material. The polymer 15 is still generally wedge shaped, but now approximates more closely to the cross-sectional profile of a peripheral encapsulation comprised in an encapsulated glazing panel of the type described below. The model now also takes account of the effect of a glass pane 21 on the electric field. The polymer 15 comprises a thinner section 13 and a thicker section 14, and it can be seen by comparing Figure 4c with Figures 2c and 3c that the power density developed in the thicker section 14 is now more uniform. This suggests that the risk of overheating the thicker section 14 is reduced in comparison with the corresponding portion of the polymer 10 of Figures 2c and 3c, and no overheating was observed in practice in the work described below. The field shaping element 12 is unchanged from Figure 3.

While, as mentioned above, a conduit, preferably a pipe, through which a liquid such as water is passed is a preferred field shaping element, other dielectric materials may be used as field shaping elements, possibly as solid bodies within the mould. The relative permittivities at room temperature of various dielectric materials were measured at 27.12MHz using a contact dielectric probe. The following table fists the permittivities in order of increasing dielectric constant ($\varepsilon_r$'):

| Polypropylene | 2.2 - 0.0j |
| Wood | 3.0 - 0.25j |
| Silicon Glass | 3.8 - 0.0j |
| Silicone rubbers | 3.0 to 5.0 - 0.0j |
| De-ionised Water | 78 - 0.7j |
| Tap Water | 80 - 20j |
| For comparison PVC plastisol has a relative permittivity of 4.0 - 0.3j at room temperature. | |

The field shaping dielectrics can be divided into two categories: those with values of dielectric constant less than that of the product material to he heated; and those with dielectric constants greater than the product material. The wood and tap water all have significant values for the dielectric loss factor, and may heat up in a RF field. Any significant rise in temperature of the field shaping dielectric would indicate that its loss factor ($\varepsilon_r$"),

is too high for the application.

However, materials with a high dielectric loss factor are not necessarily precluded from being used as field shaping dielectrics. The power absorbed in a dielectric is proportional to the product of $\varepsilon_r$" and $E^2$. If the material to be used for the field shaping dielectric has a much higher dielectric constant than the product, then the electric field in the product will be much higher than that of the field shaping dielectric.

Consequently, although $\varepsilon_r$" may be much higher in the field shaping dielectric, the product $\varepsilon_r$"$E^2$ can still he much less.

In general, dielectric properties of materials are temperature dependent. Both the dielectric constant and the dielectric loss factor can vary considerably with temperature. The effectiveness of field shaping dielectrics will be diminished as the dielectric properties of the product change relative to those of the field shaper. The choice and design of a field shaping dielectric has to represent a compromise solution which best copes with the range of dielectric properties of the product. If the temperature dependence is extreme, then there may not be an acceptable field shaping solution.

To summarise, dielectric materials often do not heat up uniformly when placed in a RF electric field. Dielectrics usually distort the electric field substantially, resulting in a non-uniform power density distribution. Even when the RF power density is uniform throughout a product, heat loss from the surface can result in a significantly higher temperature at the centre. Whatever the cause, any non-uniform heating can lead to poor quality or even damaged products.

Field shaping dielectrics, usually but not necessarily with low dielectric loss factors, can be used to influence the electric field significantly, and thus determine the power density distribution. The geometry and relative permittivity of these dielectrics have to be carefully matched to a given application.

Such field shaping dielectrics can be used to even out heating within a product; to concentrate heating in certain areas of a product; or even prevent other areas from heating up.

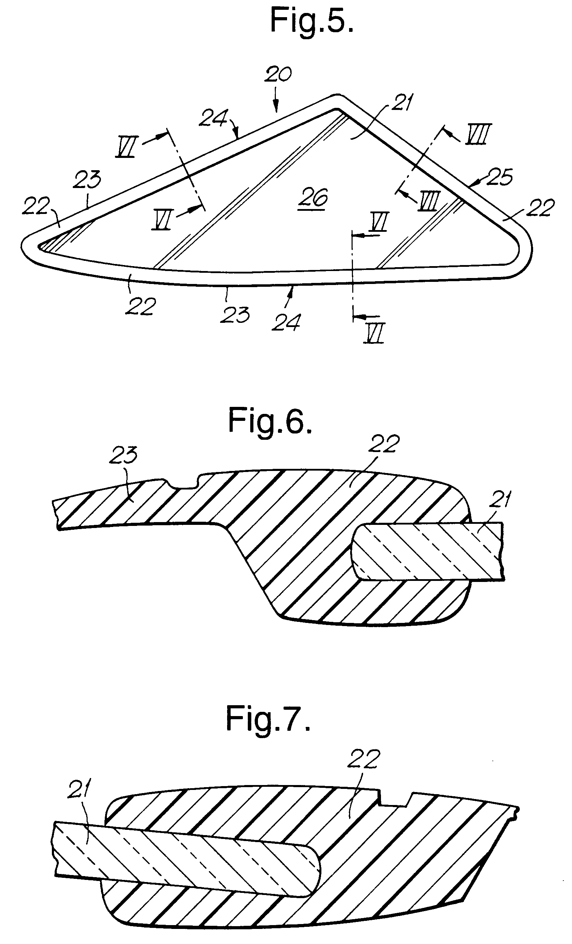

The application of this new technology to the encapsulation of a glazing panel in accordance with particular embodiments of the present invention will now be described with reference to Figures 5 to 11.

Figure 5 shows an encapsulated glazing panel 20 of a type which may be manufactured by the method of the present invention. While in this specific embodiment the glazing panel 20 comprises a hent and toughened pane 21 of glass of a size and shape suitable for use as a fixed rear side window of a car, it may in fact be of any sheet glazing material, e.g. a plastics material such as polycarbonate, or a glass/plastics composite. If made of glass, the pane may be a laminate of annealed glass plies, or of toughened (e.g. thermally or chemically toughened) glass plies, or of heat strengthened glass plies, instead of being a single toughened pane. The encapsulated panel may be for architectural use, or for use in other branches of transport, instead of for automotive use. The panel may be multiply glazed, e.g. a double glazed unit.

The encapsulated panel 20 comprises the pane 21 surrounded by a peripheral encapsulation 22. The pane has a central region 26. Part of the cross sectional profile of the encapsulation 22 is determined by the shape of the peripheral margin of the pane 21 around which it is moulded, and the remainder (which is the larger part) is determined by the vehicle designer, with the assistance of the glass manufacturer, to fit the receiving flange of the vehicle body and give a desired external finish. With the importance of the aerodynamic behaviour of vehicles, it is increasingly desirable that the encapsulation 22 possesses a thin section 23, comprising a lip, or "feather edge", which allows the panel 20 to be glazed flush with the vehicle body or at least in a condition approaching this.

Figures 6 and 7 show cross sections of the panel 20 taken along the lines VI-VI and VII-VII of Figure 5 respectively. The particular encapsulated glazing panel in question has the same cross sectional profile along its two long sides 24, and so the lines VI-VI appear twice on Figure 5. The thin section 23 of the encapsulation 22 is shown more clearly in Fig. 6. It is thin sections such as this which have been found difficult to cure using prior art dielectric heating techniques. The cross sectional profile of an encapsulation may vary, e.g. in the example shown it is different on the short side 25 of the panel 20, as shown in Figure 7. It is also quite possible that a glazing panel requires a different encapsulation profile along each of its sides.

The material from which encapsulation 22 is moulded ("the encapsulating material") may be any material which can be prepared as a settable low viscosity liquid, cured or caused to cure (whether by gelling, polymerisation, or other mechanism) by the application of heat so as to set and form a solid material having suitable properties (e.g. durability, stiffness, elasticity, density) to act as an encapsulation for a glazing panel. A preferred material is PVC plastisol, i.e. a suspension of finely divided PVC polyester particles dispersed in a plasticiser. The PVC plastisol used in this work is a proprietary product sold under the name Soltak Black SPD/346/85 by Acrol Ltd. of Everite Rd., Widnes, Cheshire, WA8 8PT.

PVC plastisol sets by a gelling process on being heated; as the temperature of the plastisol rises there is a progressive absorption of the plasticiser into the polymer particles. Setting is complete when the plasticiser has been fully absorbed to form a physically homogeneous PVC material. The temperature at which absorption of the plasticiser commences is herein referred to as the stability limit; if the material is maintained above this temperature, gellation will eventually occur. The rate of plasticiser absorption is temperature dependent, and the temperature recommended for rapid gellation is herein referred to as the target temperature. Both the stability limit and the target temperature are dependent on the formulation of the particular plastisol used; for Soltak Black SPD/346/85 the manufacturers recommend a stability limit of 40°C, and a target temperature of 140°C.

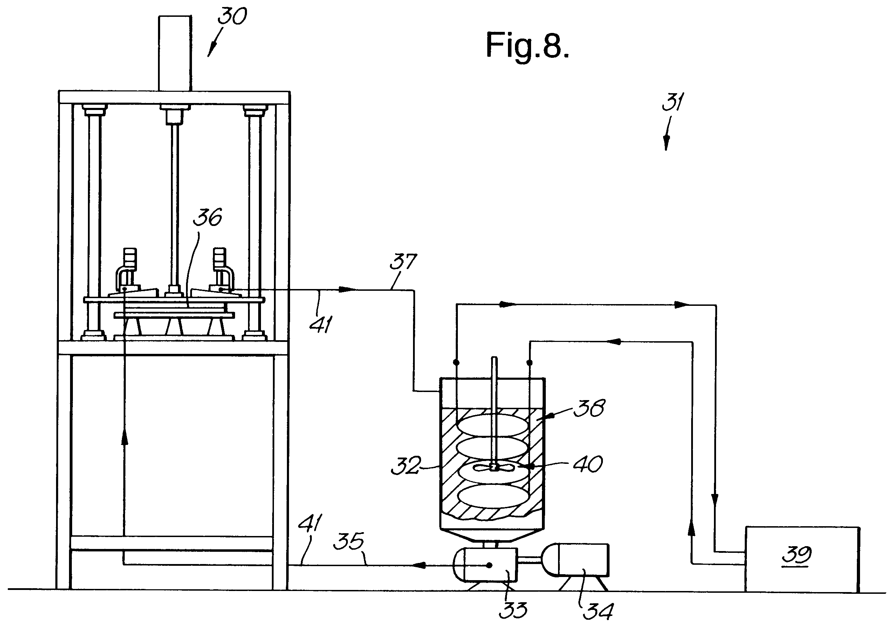

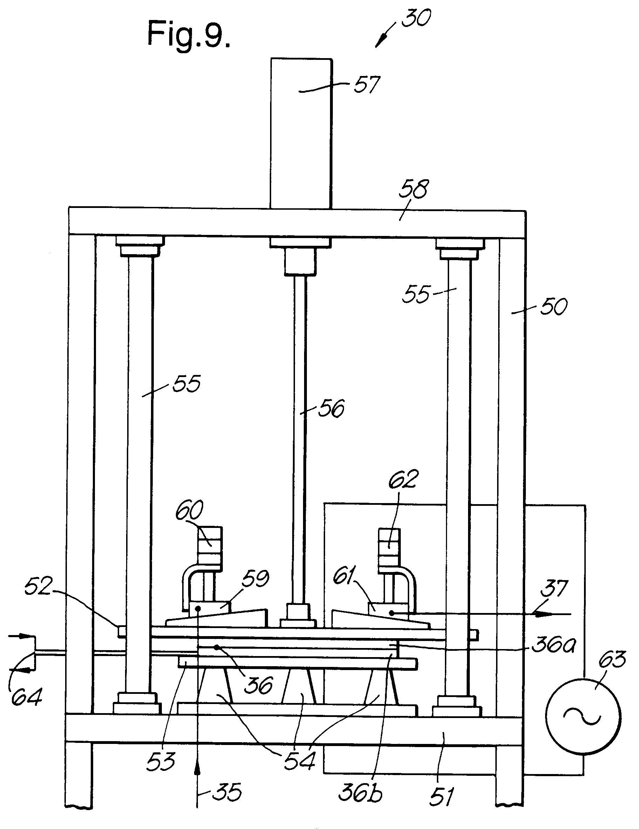

Figure 8 shows a schematic view of an apparatus for encapsulating a glazing panel in accordance with the present invention. It comprises generally a press 30 and a supply system for encapsulating material 31. The press 30 is shown in more detail in Fig. 9. The supply system 31 comprises a thermally insulated storage tank 32 for the encapsulating material, which in this embodiment is the PVC plastisol specified above, and a pump 33 driven by motor 34 to pump plastisol around the plastisol supply circuit 41. The circuit 41 comprises a feed line 35 which supplies plastisol to the mould 36, and a return line 37 from the mould which returns plastisol to the storage tank 32. The feed and return lines 35,37 are also thermally insulated. The tank 32 is provided with a heating coil 38 hated by the internal passage of hot water from a water heater 39. The temperature of the plastisol in the tank 32 is preferably controlled by a conventional thermostatic control system (not shown). The storage tank 32 is also provided with a mixer 40 comprising a rotatable paddle, primarily to ensure that heat from the heating coil 38 is evenly transferred throughout the plastisol in the tank. The pump is able to pump plastisol at a pressure in the approximate range of 70 to 900 kPa (10 to 130 psi) to overcome pressure drops in the circuit and the mould (discussed below).

Figure 9 shows the press 30 on an enlarged scale. It comprises a frame 50 having lower cross members 51 on which the mould 36 and electrode plates 52,53 are supported. In more detail, the upper electrode plate 52 is slidably mounted on vertical columns 55 and is thus in electrical contact with the columns, and hence the frame. It therefore serves as an earth electrode. The lower electrode plate 53 is a high tension electrode, and so is mounted on high tension ceramic insulators 54, of which there are six in the present apparatus (three further insulators being positioned directly behind the three shown in the drawing).

The mould 36 is designed to receive the peripheral margin of the pane 21 without enclosing its central region 26. The mould is therefore annular in plan, but need not be, i.e. the central region 26 of the pane 21 could be enclosed by the mould 36. The mould 36 comprises a mould body itself comprising two mould halves 36a and 36b which are mounted on respective electrode plates. The mould halves are provided with projecting lugs and corresponding hollows for location, and together define a mould cavity.

The mould body is composed of silicone rubber of sufficiently low dielectric loss factor so that the mould body is not significantly heated by the RF field when applied. A preferred silicone rubber is Rhone-Poulenc RTV 1597, which cures to a Shore A hardness of 40 with 0.1% shrinkage, and is available from Bentley Chemicals of Kidderminster, County of Hereford and Worcester. The mould is opened and closed by sliding vertical movement of the upper plate 52, the plate being attached to a piston rod 56 of pneumatic cylinder 57, which is mounted on upper cross member 58 of the frame 50. Another advantage of the low injection pressures used in the present invention is that they generally allow the use of pneumatic rather than hydraulic cylinders to close the mould and exert the clamping force, thereby reducing the cost of the apparatus.

Plastisol supplied via the feed line 35 may be introduced into the mould cavity via an injector, which passes through the upper plate 52, having an inlet valve 59 activated by a small pneumatic cylinder 60. Similarly, the mould is provided with an outlet via outlet valve 61 actuated by a small pneumatic cylinder 62. It is therefore possible to set up a continuous flow of plastisol around the plastisol supply circuit 41, passing through the mould cavity and the storage tank 32. A mould bypass leg (not shown) is also provided so that this flow may continue when either of the valves 59,61 is shut. The valves 59,61 are provided with pressure sensors (not shown) to monitor the pressure at those points. A water supply 64, preferably of de-ionised water and comprising means for adjustment of water temperature and solute content, is provided for the field shaping element(s) (described below in conjunction with Figure 9).

The electrodes 52,53 which together constitute the applicator are connected to an RF source 63. Connection may be to any suitable RF source by means of copper straps, or preferably to an RF generator with an output impedance of 50Ω by means of 50Ω coaxial cables. As is well known to those skilled in RF dielectric heating, connection to the high tension electrode plate 53 is preferably made at two or more points, suitably located to obtain a uniform electric potential across the plate.

In principle, operating frequencies of 5-500 MHz are suitable for RF dielectric heating, with a preferred range being 10-100 MHz. In practice, use of frequencies in these ranges is statutorily controlled to prevent interference of one application with another. The permitted frequencies for RF dielectric heating are 13.56 MHz, 27.12 MHz or 40.68 MHz, and in the present apparatus 13.56 MHz was used.

The voltage at which RF energy is applied is not especially critical. In practice, the upper limit is governed by the danger of insulators, especially air, breaking down and electrical arcs occurring. The lower limit is also governed by a practical consideration, namely, the rate of heating and hence curing which is desired. This will obviously contribute to the time taken to encapsulate a panel with the apparatus, i.e. the cycle time. Typically, voltages of 1000 to 5000 V were used in this apparatus, but higher voltages could be used to shorten cycle time, providing that precautions against the occurrence of electrical arcs were taken.

In use, the RF applicator (in practice for convenience the whole press 30) is surrounded by a Faraday cage (not shown) to contain the electric field for safety reasons.

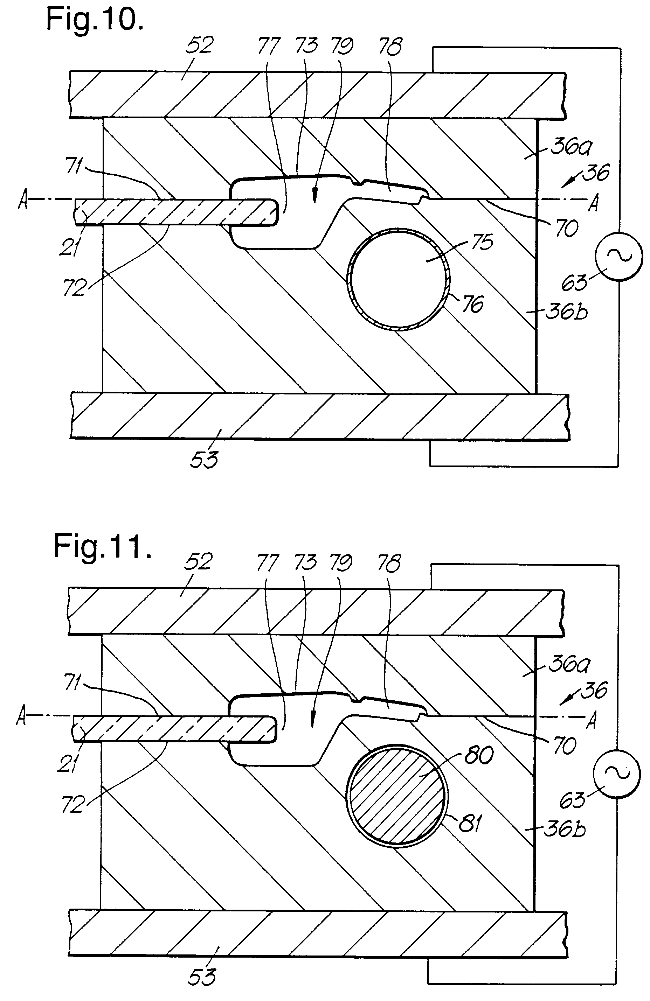

Figure 10 shows an enlarged cross sectional view of part of the annular mould 36, a right hand part in the direction of view. If seen in plan before attachment to the plates, the mould for the panel 20 of Figure 5 would be in the form of a generally triangular ring. Since the central region 26 of pane 21 is not covered by the mould, Fig. 10 would show a left hand part of the mould if the figure were extended to the left, as the line of cross section would cut the mould at two opposed points.

The mould 36 splits along the line A-A when the mould is opened, and mould halves 36a and 36b meet and seal against each other directly in area 70. In the area where the pane 21 passes between the mould halves 36a, 36b, they are provided with land areas 71,72 which seal against the pane 21. The mould halves 36a, 36b together define an open elongate cavity 73 which receives the peripheral margin of the pane 21 to further define a closed volume 79 into which the PVC plastisol is introduced to encapsulate the pane.

The lower mould half 36b is provided with a dielectric field shaping element preferably in the form of a conduit, shown here as a water pipe 75. Alternatively, or in addition, such an element may be provided in the upper mould half 36a. The conduit is preferably positioned sufficiently close to the cavity within the mould body so that, in use, heat is conducted from the cavity to the conduit and removed by the dielectric liquid flowing through the conduit, which as mentioned above is water in the present embodiment. The conduit therefore serves as both a field shaping element and a cooling channel.

The cavity 73 defined by the mould halves 36a,36b comprises first and second portions, the first portion being of relatively thicker cross-section and the second portion being of relatively thinner cross-section, and the dielectric field shaping element is positioned in the vicinity of the second portion. In Figure 10, the cavity 73 is shown containing a peripheral margin of the pane 21, but a thicker first portion 77 and a thinner second portion 78 may still be identified..

The configuration of the cross-section of the encapsulation to be moulded determines the field shaping required, and hence the arrangement of the dielectric field shaping element(s). There may be one or more elements provided, and the element(s) may be of differing cross-sectional shape, size or position within the mould body according to the cross-section of the encapsulation. Moreover, when, as here, the element is a conduit, the cross-sectional shape, size, or position of the conduit relative to the elongate cavity 73 may vary along the length of the conduit, which extends in a direction generally parallel or sub-parallel to the direction of elongation of the cavity. Certainly, the conduit need not be of circular cross-section.

Preferably the conduit comprises a water pipe 75 having a wall 76. The wall 76 of the pipe 75 may be made from a dielectric material, preferably one of low loss factor, so that it does not heat up significantly. Suitable materials include polypropylene, PTFE, silicone rubber, and some glasses. A particularly preferred material for the wall is the same material as the mould 36 itself (or, at least, one having the same dielectric properties), because the wall of the pipe will not affect the electric field, simplifying the design of the dielectric field shaping element.

An alternative way of creating a space to serve as part of the enclosure for the dielectric liquid is the so-called "lost wax" process, i.e. a casting process in which a soluble or meltable body is included when the mould is cast, and removed by dissolution or melting to leave a space. When the space serves as a conduit, this has the advantage that the body of the mould itself serves as the wall of the conduit, thereby eliminating the possibility of the wall of a pipe affecting the electric field, but it is important to have full control of the process to ensure that a satisfactory internal profile is achieved in the conduit. Imperfections, especially roughness or protrusions, (whether towards or away from the centre of the conduit), may result in the field shaping effect achieved not being the one desired.

Figure 11 shows an alternative embodiment of the invention, in which the field shaping element within mould 36 comprises a solid body 80 disposed within a space 81. The solid body 80 is composed of a dielectric or ferroelectric material having a dielectric constant suitable for the degree of field shaping desired, and a loss factor low enough that it does not heat up significantly during application of the electric field. The material may be one of the dielectric materials listed earlier.

The operation of the apparatus and the procedure for encapsulating a glazing panel will now be described with reference to the drawings, employing the embodiment of Figure 10. Prior to starting, the mould is cleaned. When the mould is made of silicone rubber, there is no need for a mould release agent, but if the mould is made of a different material such a need may arise. When the glazing pane 21 is made of glass, it may be pretreated to promote adhesion of the encapsulation, comprising wiping its peripheral margin with a silane containing adhesion promoter such as Hamatite GPI 300, made by Yokohama Rubber of Japan, or Morton Yokohama of USA, which is used in accordance with the manufacturer's instructions, and then preheating the pane to a temperature in the range 80°C to 190°C, preferably around 140°C. Alternative adhesion promoters are in development which will function at room temperature, thereby obviating the need for preheating the pane, and facilitating encapsulation of laminates. With the mould 36 in the open condition, the pane 21 is placed in the lower mould half 36b so as to locate on the land areas 72 in the correct position relative to the cavity 73. The mould is then closed by operation of the cylinder 57, causing the rod 56 and the upper electrode plate 52 to descend so that the upper mould half 36a contacts the lower mould half 36b and the pane 21, and an appropriate clamping force is applied. The clamping force is selected to exceed the pressure at which the plastisol is injected (discussed below) by a modest percentage so as to provide a safety margin to preclude leakage.

As has already been described, provision has been made in the apparatus to maintain the plastisol in the storage tank 32 at a selected elevated temperature. Because an insulated plastisol supply circuit 41, complete with bypass leg, is provided, during continuous pumping the plastisol is at virtually the same temperature throughout the supply circuit. The advantages of maintaining the plastisol at an elevated temperature, so that it is preheated on entry into the mould cavity 73, are several: first, the viscosity of the plastisol is reduced; typically it halves for every 10°C rise in temperature. Secondly, as the plastisol is already part way to the target gelling temperature, less dielectric heating is needed. This reduces the heating time and, given that the loss factor of plastisol does not appear to vary significantly with temperature, thus also reduces any divergence in temperature of the plastisol between different points in the mould cavity 73, as even with the field shaping element the dielectric heating effect is unlikely to be perfectly uniform. Thirdly, use of a temperature control system alleviates variations in plastisol temperature due to outside influences, e.g. seasonal variation of temperature in a factory environment.

The elevated temperature is selected with reference to the following considerations: the higher it is, the greater the benefit derived from the first two advantages mentioned above; however, the elevated temperature should not exceed the stability limit for the material (at which slow gelling commences), which may be considerably below the recommended target temperatue for rapid gelling. For example, since the PVC plastisol material used (Soltak Black SPD/346/85) has a target temperature of around 140°C, and a stability limit of around 40°C, it is preferred to pump it at an elevated temperature just below the stability limit.

The inlet valve 59 is opened so as to introduce plastisol into the closed volume 79 of the mould cavity 73 from the feed line 35. Similarly, the outlet valve 61 is opened to allow initially air, and subsequently (when the mould is substantially full) plastisol out into the return line 37. Plastisol is allowed to flow through the closed volume 79 and round the supply circuit 41 until substantially all the air has been expelled from the closed volume 79. The period of time required for this is best determined by experience according to the design for the shape of the encapsulation 22 being moulded; an initial period of three times the filling time may be allowed. It is possible to detect when plastisol reaches the outlet valve 61 by monitoring the pressure there.

As mentioned earlier, one of the principal advantages of this method of encapsulation is the very low injection pressure which may be employed. The pressure drop across the filled closed volume of the mould cavity when plastisol is flowing may (again according to design) ranges from as little as 10 kPa (1.5 psi) up to perhaps 700 kPa (100 psi) and preferably ranges from 70 to 550 kPa (10 to 80 psi). There are in addition small pressure drops across each of the feed line 35 and return line 37 which depend on their length and bore, possibly amounting to 10 to 100 kPa (1.5 to 15 psi). The storage tank 32 is not pressurised in the example of the apparatus illustrated, i.e. the end of the return line 37 is essentially open. Inlet pressures into the closed volume of the mould cavity at the inlet valve 59 may range from 40 to 400 kPa (6 to 60 psi), and preferably from 100 to 200 kPa (15 to 30 psi); a typical inlet pressure for the mould 36 designed to mould the encapsulation 22 of the encapsulated panel 20 shown in Fig. 5 was measured at 100 kPa (15 psi). When designing the supply circuit 41 it is generally desirable to attempt to minimize the various pressure drops so as not to lose one of the principal advantages of this method of encapsulation.

Having expelled air from the mould cavity 73, valves 59 and 61 are closed. Preferably outlet valve 61 is closed first so as to slightly pressurise the encapsulating material in the mould cavity; this improves the surface finish of the encapsulation 22. The RF electric field is then switched on, and applied for a period ranging possibly from 20 seconds to 2 minutes, depending on the temperature to be attained and the power density achieved in the mould cavity. It is sufficient to apply dielectric heating for a period such that, from experience, it is known that the plastisol in all parts of the closed volume of the mould cavity 73 has slightly exceeded the target temperature. Excessive heating beyond this is to be avoided as thermal degradation of the gelled PVC may occur. During the period for which the RF field is applied, it is of course necessary to have water (because of its low loss factor, deionised water is preferred) from supply 64 present in the pipe 75 to achieve the desired field shaping effect. Preferably the water is flowing through the pipe to allow control of the temperature of the water. The dielectric constant of the water may be varied by altering its temperature or by adding a solute.

Depending on the encapsulating material used, it may, despite having gelled, be too soft and weak at the target temperature to be safely removed from the mould. This is the case with the Soltak plastisol used, and so the water is allowed to flow or continue flowing, acting now as cooling water, until a temperature is reached at which adequate strength has developed. Using the above material, the newly moulded encapsulation 22 (together with, of course, the peripheral margin of the now encapsulated pane 21) is preferably cooled to below 100°C before the mould is opened and the encapsulated panel 20 removed.

In addition to the advantages of low cost and short fabrication time which have already been described, the use of a silicone rubber mould together with low injection pressures confers the further advantage that, in effect, the whole mould acts as a seal. It has been found that with this technique, considerably less leakage of encapsulating material occurs during moulding, so less trimming (e.g. removal of "flash") and finishing of the encapsulated panel is required. Moreover, since it is possible to design the system so that the feed and return lines are outside the space subjected to the RF field, there is also very little sprue to be trimmed from the panel. Both these aspects also result in more economical use of the encapsulating material.

## Claims

1. A mould (36) for moulding an edge encapsulation (22) on to a glazing panel (20) comprising a mould body (36a,36b) composed of dielectric material shaped to receive the glazing panel (20), the mould body (36a,36b) defining an elongate cavity (73) for receiving a liquid encapsulating material, which, in use, surrounds an edge portion of the glazing panel (20), characterised in that

   an electrically polarizable field shaping element (75) is provided within the mould body (36a,36b).

2. A mould as claimed in claim 1, wherein the field shaping element comprises a solid body (80) of dielectric or ferroelectric material.

3. A mould as claimed in claim 1, wherein the field shaping element comprises an enclosure (75) for a dielectric liquid.

4. A mould as claimed in claim 3, wherein the enclosure comprises a conduit (75) through which a dielectric liquid is passed in use.

5. A mould as claimed in claim 4, wherein the conduit comprises a pipe (75) having a wall (76) of dielectric material.

6. A mould as claimed in claim 4 or claim 5, wherein the position of the conduit (75) within the mould body (36a,36b) is sufficiently close to the cavity (73) so that, in use, heat is conducted from the cavity (73) to the conduit (75) and removed by the dielectric liquid.

7. A mould as claimed in any preceding claim, wherein the cavity (73) comprises first and second portions (77,78), the first portion (77) being of relatively thicker cross-section and the second portion being of relatively thinner cross-section, and the field shaping element (75) is positioned in the vicinity of the second portion (78).

8. An apparatus for edge encapsulating a glazing panel (20) comprising:

a mould (76) according to any preceding claim, a supply system (31) for supplying liquid encapsulating material to the elongate cavity (73) in the mould (36), and an electric field generator (63) for subjecting the mould (36) to an alternating electric field.

9. An apparatus as claimed in claim 8, wherein the electric field generator (63) is arranged to operate at a frequency from 5 to 500 MHz, preferably from 10 to 100 MHz.

10. A method of moulding an edge encapsulation (22) on to a glazing panel (20) comprising the steps of:

(a) providing a mould (36) comprising a mould body (36a,36b) composed of dielectric material shaped to receive the glazing panel (20), the mould body (36a, 36b) defining an elongate cavity (73) for receiving a liquid encapsulating material heatable by dielectric heating,
(b) placing the glazing panel (20) in the mould (36) so that an edge portion of the panel (20) projects into the mould cavity (73),
(c) introducing the liquid encapsulating material into the cavity (73) so as to surround the edge portion of the panel (20),
(d) subjecting the mould (36) and the encapsulating material to an alternating electric field to produce a heating effect in the encapsulating material in order to set it,
characterised by

providing in the mould body (36) an electrically polarizable field shaping element (75) whereby a substantially uniform heating effect is produced in the encapsulating material by concentrating the intensity of the electric field in a desired portion of the encapsulating material.

11. A method as claimed in claim 10, wherein the field shaping element (75) has a dielectric constant in the range from 2 to 1000, preferably in the range from 50 to 100.

12. A method as claimed in claim 10 or claim 11, wherein the field shaping element comprises a solid body (80) of dielectric or ferroelectric material.

13. A method as claimed in claim 10 or claim 11, wherein the field shaping element comprises an enclosure (75) for a dielectric liquid.

14. A method as claimed in claim 13, wherein the field shaping element comprises a dielectric liquid which flows through a conduit (75) for at least part of step (d), in which the encapsulating material is heated.

15. A method as claimed in claim 14, wherein the dielectric constant of the liquid is varied as it flows through the conduit (75) so as to vary the intensity of the electric field in the desired portion of the encapsulating material.

16. A method as claimed in claim 15, wherein the dielectric constant of the liquid is varied for only part of step (d).

17. A method as claimed in any one of claims 13 to 16, wherein the dielectric liquid is water.

18. A method as claimed in any one of claims 14 to 17, wherein after step (d) the method further comprises cooling the mould (36) and the encapsulating material by passage of the dielectric liquid.

19. A method as claimed in any one of claims 10 to 18, further comprising the step of preheating the encapsulating material before step (c).

20. A method as claimed in any one of claims 10 to 19, wherein the encapsulating material is circulated around a supply circuit (41), and step (c) includes introducing the encapsulating material from the supply circuit (41) into the mould cavity (73) via an inlet valve (59), allowing the material to flow through the cavity (73) so as to substantially fill it, and allowing excess material to leave the cavity (73) via an outlet valve (61) and return to the supply circuit (41), then closing the outlet valve (61) before closing the inlet valve (59) so as to pressurise the material in the cavity (73).

21. A method according to any one of claims 10 to 20, wherein the edge encapsulation (22) formed from the set encapsulating material comprises first and second portions, the first portion being of relatively thicker cross-section and the second portion (23) being of relatively thinner cross-section, and the electrically polarizable field shaping element (75) is provided in the mould body (36a,36b) in the vicinity of that part of the cavity (73) in which the second portion (23) of the encapsulation (22) is moulded.

22. A method as claimed in claim 21, wherein the second portion (23) of relatively thinner cross-section comprises a lip (23)

23. A method as claimed in any one of claims 10 to 22, wherein the encapsulation (22) is composed of gelled PVC plastisol.

**Patentansprüche**

1. Formwerkzeug (36) zum Anformen einer Randeinfassung (22) an einer Verglasungsplatte (20), mit einem aus dielektrischem Material bestehenden Formkörper (36a,36b) zur Aufnahme der Verglasungsplatte (20), wobei der Formkörper (36a,36b) einen langgestreckten Hohlraum (73) zur Aufnahme eines flüssigen Einfassungsmaterials bildet, der bei Verwendung einen Randteil der Verglasungsplatte (20) umgibt, dadurch gekennzeichnet, daß ein elektrisch polarisierbares Feldformungselement (75) innerhalb des Formkörpers (36a,36b) vorgesehen ist.

2. Formwerkzeug nach Anspruch 1, bei welchem das Feldformungselement einen festen Körper (80) aus dielektrischem oder ferroelektrischem Material aufweist.

3. Formwerkzeug nach Anspruch 1, bei welchem das Feldformungselement eine Umfassung (75) für eine dielektrische Flüssigkeit bildet.

4. Formwerkzeug nach Anspruch 3, bei welchem die Umfassung aus einer Leitung (75) besteht, durch die bei Verwendung eine dielektrische Flüssigkeit geleitet wird.

5. Formwerkzeug nach Anspruch 4, bei welchem die Leitung aus einem Rohr (75) mit einer Wand (76) aus dielektrischem Material besteht.

6. Formwerkzeug nach Anspruch 4 oder 5, bei welchem die Lage der Leitung (75) innerhalb des Formkörpers (36a, 36b) sich ausreichend nahe am Hohlraum (73) befindet, so daß bei Verwendung Wärme vom Hohlraum (73) zur Leitung (75) geleitet und durch die dielektrische Flüssigkeit abgeführt wird.

7. Formwerkzeug nach einem der vorangehenden Ansprüche, bei welchem der Hohlraum (73) einen ersten und zweiten Teil (77,78) aufweist, wobei der erste Teil (77) relativ dickeren Querschnitt und der zweite Teil relativ dünneren Querschnitt besitzt und das Feldformungselement (75) in der Nachbarschaft des zweiten Teils (78) angeordnet ist.

8. Vorrichtung zum Randeinfassen einer Verglasungsplatte (20), welche aufweist:

     ein Formwerkzeug (76) nach einem der vorangehenden Ansprüche,
     ein Zuführsystem (31) zum Zuführen von flüssigem Einfassungsmaterial in den langgestreckten Hohlraum (73) im Formwerkzeug (36), sowie

     einen elektrischen Feldgenerator (63), um das Formwerkzeug (36) einem elektrischen Wechselfeld auszusetzen.

9. Vorrichtung nach Anspruch 8, bei welcher der elektrische Feldgenerator (63) so ausgebildet ist, daß er bei einer Frequenz von 5 bis 500 MHz, vorzugsweise von 10 bis 100 MHz, arbeitet.

10. Verfahren zum Anformen einer Randeinfassung (22) an eine Verglasungsplatte (20), welches die folgenden Schritte umfaßt:

     (a) Vorbereiten eines Formwerkzeugs (36) mit einem Formkörper (36a,36b) aus einem dielektrischen Material zur Aufnahme der Verglasungsplatte (20), wobei der Formkörper (36a,36b) einen langgestreckten Hohlraum (73) zur Aufnahme eines flüssigen Einfassungsmaterials bildet, das durch dielektrisches Erhitzen aufheizbar ist,
     (b) Eingeben der Verglasungsplatte (20) in das Formwerkzeug (36) derart, daß ein Randteil der Platte (20) in den Formhohlraum (73) vorragt,
     (c) Einleiten des flüssigen Einfassungsmaterials in den Hohlraum (73) derart, daß der Randteil der Platte (20) umgeben wird,
     (d) Aussetzen des Formwerkzeugs (36) und des Einfassungsmaterials einem elektrischen Wechselfeld, um eine Heizwirkung in dem Einfassungsmaterial zu dessen Aushärtung zu erzeugen,
         gekennzeichnet durch

     Einbringen in den Formkörper (36) eines elektrisch polarisierbaren Feldformungselements (75), wodurch eine im wesentlichen gleichförmige Heizwirkung in dem Einfassungsmaterial durch Konzentrieren der Intensität des elektrischen Feldes in einem gewünschten Teil des Einfassungsmaterials hervorgerufen wird.

11. Verfahren nach Anspruch 10, bei welchem das Feldformungselement (75) eine Dielektrizitätskonstante im Bereich von 2 bis 1000, vorzugsweise im Bereich von 50 bis 100 besitzt.

12. Verfahren nach Anspruch 10 oder 11, bei welchem das Feldformungselement einen festen Körper (80) aus dielektrischem oder ferroelektrischem Material aufweist.

13. Verfahren nach Anspruch 10 oder 11, bei welchem das Feldformungselement aus einer Umfassung (75) für eine dielektrische Flüssigkeit besteht.

**14.** Verfahren nach Anspruch 13, bei welcher das Feldformungselement eine dielektrische Flüssigkeit aufweist, die durch eine Leitung (75) wenigstens während eines Teils des Schrittes (d) strömt, in welchem das Einfassungsmaterial erhitzt wird.

**15.** Verfahren nach Anspruch 14, bei welchem die Dielektrizitätskonstante der Flüssigkeit geändert wird, während sie durch die Leitung (75) strömt, um die Intensität des elektrischen Feldes im gewünschten Teil des Einfassungsmaterials zu verändern.

**16.** Verfahren nach Anspruch 15, bei welchem die Dielektrizitätskonstante der Flüssigkeit sich nur in einem Teil des Schrittes (d) ändert.

**17.** Verfahren nach einem der Ansprüche 13 bis 16, bei welchem die dielektrische Flüssigkeit Wasser ist.

**18.** Verfahren nach einem der Ansprüche 14 bis 17, bei welchem nach dem Schritt (d) das Verfahren ferner das Kühlen des Formwerkzeugs (36) und des Einfassungsmaterials mittels Durchleiten der dielektrischen Flüssigkeit umfaßt.

**19.** Verfahren nach einem der Ansprüche 10 bis 18, bei welchem ein Schritt der Vorerhitzung des Einfassungsmaterials vor dem Schritt (c) erfolgt.

**20.** Verfahren nach einem der Ansprüche 10 bis 19, bei welchem das Einfassungsmaterial in einem Zuführkreislauf (41) umgewälzt wird, und der Schritt (c) das Einleiten des Einfassungsmaterials aus dem Zuführkreislauf (41) in den Formhohlraum (73) über ein Einlaßventil (59) umfaßt, Hohlraum (73) derart fließt, daß es denselben im wesentlichen ausfüllt, und daß überschüssiges Material den Hohlraum (73) über ein Auslaßventil (61) verlassen und in den Zuführkreislauf (41) zurückfließen kann, sodann das Auslaßventil (61) vor dem Schließen des Einlaßventils (59) geschlossen wird, um das Material im Hohlraum (73) unter Druck zu setzen.

**21.** Verfahren nach einem der Ansprüche 10 bis 20, bei welchem die Randeinfassung (22), die aus dem ausgehärteten Einfassungsmaterial gebildet ist, einen ersten und zweiten Abschnitt aufweist, wobei der erste Abschnitt relativ dickeren Querschnitt besitzt und der zweite Abschnitt (23) relativ dünneren Querschnitt besitzt, und das elektrisch polarisierbare Feldformungselement (75) im Formkörper (36a,36b) in der Nachbarschaft desjenigen Teils des Hohlraums (73) vorgesehen ist, in welchem der zweite Teil (23) der Einfassung (22) geformt wird.

**22.** Verfahren nach Anspruch 21, bei welchem der zweite Teil (23) mit relativ dünnerem Querschnitt eine Lippe (23) bildet.

**23.** Verfahren nach einem der Ansprüche 10 bis 22, bei welchem die Einfassung (22) aus geliertem PVC-Plastisol besteht.

**Revendications**

**1.** Moule (36) pour mouler un encapsulage de bords (22) sur une vitre (20) comprenant un corps de moule (36a, 36b) composé de matériau diélectrique façonné de manière à recevoir la vitre (20), le corps de moule (36a, 36b) définissant une cavité allongée (73) pour recevoir un matériau d'encapsulage liquide, qui, à l'utilisation, entoure une portion de bords de la vitre (20), caractérisé en ce que

un élément de façonnage de champ polarisable électriquement (75) est situé au sein du corps de moule (36a, 36b).

**2.** Moule selon la revendication 1, dans lequel l'élément de façonnage de champ comprend un corps plein (80) de matériau diélectrique ou ferroélectrique.

**3.** Moule selon la revendication 1, dans lequel l'élément de façonnage de champ comprend une enceinte (75) pour un liquide diélectrique.

**4.** Moule selon la revendication 3, dans lequel l'enceinte comprend un conduit (75) va lequel un liquide diélectrique est passé à l'utilisation.

**5.** Moule selon la revendication 4, dans lequel le conduit comprend un tuyau (75) comportant une paroi (76) de matériau diélectrique.

**6.** Moule selon la revendication 4 ou la revendication 5, dans lequel la position du conduit (75) au sein du corps de moule (36a, 36b) est suffisamment proche de la cavité (73) de manière que, à l'utilisation, la chaleur soit conduite de la cavité (73) au conduit (75) et extraite par le liquide diélectrique.

**7.** Moule selon l'une quelconque des revendications précédentes, dans lequel la cavité (73) comprend des première et seconde portions (77, 78), la première portion (77) ayant une section transversale relativement épaisse et la seconde portion ayant une section transversale relativement mince, et l'élément de façonnage de champ (75) est positionné au voisinage de la seconde portion (78).

**8.** Appareil pour l'encapsulage de bords d'une vitre (20) comprenant :

un moule (36) selon l'une quelconque des revendications précédentes,

un système d'alimentation (31) pour distribuer le matériau d'encapsulage liquide à la cavité allongée (73) dans le moule (36), et

un générateur de champ électrique (63) pour soumettre le moule (36) à un champ électrique alternatif.

9. Appareil selon la revendication 8, dans lequel le générateur de champ électrique (63) est agencé de manière à opérer à une fréquence de 5 à 500 MHz, de préférence de 10 à 100 MHz.

10. Procédé de moulage d'un encapsulage de bords (22) sur une vitre (20) comprenant les phases consistant à :

(a) prévoir un moule (36) comprenant un corps de moule (36a, 36b) composé de matériau diélectrique façonné de manière à recevoir la vitre (20), le corps de moule (36a, 36b) définissant une cavité allongée (73) pour recevoir un matériau d'encapsulage liquide adapté à être chauffé par chauffage diélectrique,
(b) placer la vitre (20) dans le moule (36) de manière qu'une portion de bords de la vitre (20) se projette dans la cavité de moule (73),
(c) introduire le matériau d'encapsulage liquide dans la cavité (73) afin d'entourer la portion de bords de la vitre (20),
(d) soumettre le moule (36) et le matériau d'encapsulage à un champ électrique alternatif afin de produire un effet de chauffage dans le matériau d'encapsulage pour le faire durcir,
caractérisé en ce que

dans le corps de moule (36) est disposé un élément de façonnage de champ polarisable électriquement (75) de manière qu'un effet de chauffage sensiblement uniforme soit produit dans le matériau d'encapsulage en concentrant l'intensité du champ électrique dans une portion souhaitée du matériau d'encapsulage.

11. Procédé selon la revendication 10, dans lequel l'élément de façonnage de champ (75) a une constante diélectrique dans la plage de 2 à 1000, de préférence dans la plage de 50 à 100.

12. Procédé selon la revendication 10 ou la revendication 11, dans lequel l'élément de façonnage de champ comprend un corps plein (80) de matériau diélectrique ou ferro-électrique.

13. Procédé selon la revendication 10 ou la revendication 11, dans lequel l'élément de façonnage de champ comprend une enceinte (75) pour un liquide diélectrique.

14. Procédé selon la revendication 13, dans lequel l'élément de façonnage de champ comprend un liquide diélectrique qui s'écoule dans un conduit (75) pendant au moins une partie de la phase (d), dans laquelle le matériau d'encapsulage est chauffé.

15. Procédé selon la revendication 14, dans lequel la constante diélectrique du liquide est modifiée tandis que le liquide s'écoule dans le conduit (75) afin de faire varier l'intensité du champ électrique dans la portion souhaitée du matériau d'encapsulage.

16. Procédé selon la revendication 15, dans lequel la constante diélectrique du liquide est modifiée pendant seulement une partie de la phase (d).

17. Procédé selon l'une quelconque des revendications 13 à 16, dans lequel le liquide diélectrique est de l'eau.

18. Procédé selon l'une quelconque des revendications 14 à 17, dans lequel après la phase (d) le procédé comprend, en outre, le refroidissement du moule (36) et du matériau d'encapsulage par passage du liquide diélectrique.

19. Procédé selon l'une quelconque des revendications 10 à 18, comprenant, en outre, la phase consistant à préchauffer le matériau d'encapsulage avant la phase (c).

20. Procédé selon l'une quelconque des revendications 10 à 19, dans lequel le matériau d'encapsulage est amené à circuler autour d'un circuit d'alimentation (41), et la phase (c) consiste à introduire le matériau d'encapsulage depuis le circuit d'alimentation (41) dans la cavité de moule (73) va une soupape d'entrée (59), permettre au matériau de s'écouler dans la cavité (73) afin de remplir sensiblement celle-ci, et permettre au matériau en excès de quitter la cavité (73) via une soupape de sortie (61) et de regagner le circuit d'alimentation (41), puis fermer la soupape de sortie (61) avant de fermer la soupape d'entrée (59) afin de pressuriser le matériau dans la cavité (73).

21. Procédé selon l'une quelconque des revendications 10 à 20, dans lequel l'encapsulage de bords (22) formé à partir du matériau d'encapsulage durci comprend des première et seconde portions, la première portion ayant une section transversale relativement épaisse et la seconde portion (23) ayant une section transversale relativement mince, et l'élément de façonnage de champ polarisable électriquement (75) est situé dans le corps de moule (36a, 36b) au voisinage de la partie de la cavité (73) dans laquelle la seconde portion (23) de l'encapsulage (22) est moulée.

22. Procédé selon la revendication 21, dans lequel la seconde portion (23) à section transversale relativement mince comprend une bordure (23).

23. Procédé selon l'une quelconque des revendications 10 à 22, dans lequel l'encapsulage (22) est composé de plastisol PVC gélifié.

Fig.1a.

Fig.1b.

Fig.1c.

Fig.2a.

Fig.2b.

Fig.2c.

Fig.3a.

Fig.3b.

Fig.3c.

EP 0 723 494 B1

## Fig.4a.

Fig.4b.

# Fig.4c.

EP 0 723 494 B1

# Fig.5.

# Fig.6.

# Fig.7.

Fig.8.

EP 0 723 494 B1

# Fig.9.

**Fig.10.**

**Fig.11.**